# DEMANDE DE BREVET EUROPEEN

(11) **EP 0 786 853 A1**
(43) Date de publication de la demande: **30.07.1997**
(21) Numéro de dépôt: 97440006.1
(22) Date de dépôt: 22.01.1997
(51) Int. Cl.: H02K 7/116, H02K 11/00

(54) **Groupe moto-réducteur électrique compact de puissance**

(30) Priorité: 23.01.1996 FR 9600909
(71) Demandeur: SAIT MINING, F-67700 Saverne (FR)
(72) Inventeur: Ohlmann, Léon, 67580 Mertzwiller (FR)
(74) Mandataire: Metz, Paul

(57) **Abrégé**

Le moto-réducteur (21 ou 22) se compose d'une pluralité de moteurs électriques (23,24) disposés en couronne (25) autour d'une roue dentée unique (27) sur laquelle s'engrène le pignon d'attaque (30) de chaque moteur.

L'ensemble est placé dans un carter (34) cloisonné par une plaque de séparation (40). Le volume central intérieur libre délimité par la couronne (25) formée par les moteurs (23,24) est utilisé pour loger le module de commande (38) des moteurs.

Cette invention intéresse tous les constructeurs de moto-réducteurs notamment de grande puissance et les constructeurs d'installations nécessitant des moteurs de grande puissance.

## Description

On utilise dans différents domaines de l'industrie des moteurs électriques de grande puissance.

C'est le cas notamment de l'entraînement de convoyeurs lourds dans les industries de matières premières : minerais, charbon, matériaux...

Par exemple, au fond des mines, la matière est transportée par des convoyeurs de grandes tailles capables d'acheminer des quantités importantes dont les débits dépassent 1000 tonnes par heure.

La bande transporteuse de ces convoyeurs est entraînée par des moteurs de grande puissance de 100 à 400 KW pour une puissance installée allant jusqu'à 1000 KW par l'intermédiaire d'un rouleau entraîneur d'extrémité à travers un réducteur mécanique.

Pour les convoyeurs de grande longueur on prévoit plusieurs moteurs fonctionnant en synchronisation, dont un à chacune des extrémités et éventuellement le long de la bande transmettant leur puissance à la bande transporteuse par l'intermédiaire d'un réducteur.

En général, pour des installations de cette importance, on prévoit en extrémité une station dite d'accélération qui a pour but de faciliter le démarrage et les changements d'allures.

En raison de la forte puissance appliquée, la bande risque de se casser au démarrage.

Plusieurs solutions existent pour permettre un démarrage ou un changement d'allure en douceur.

On utilise déjà couramment des coupleurs par exemple hydrauliques disposés entre chaque moteur et chaque réducteur.

Outre leur coût important, ceux-ci présentent de nombreux inconvénients.

Ils sont encombrants et ils chauffent.

Un espace doit leur être réservé dans un lieu déjà réduit, confiné et surchauffé comme l'est une galerie de mine.

Les moyens de ventilation et de refroidissement à prévoir sont importants, coûteux et générateurs de bruit et d'inconfort.

De plus, leur rendement mécanique est médiocre, représentant une perte de puissance non souhaitable dans des lieux peu accessibles où la fourniture en énergie électrique est unique et peu facile à distribuer.

Par ailleurs, les moteurs électriques les plus performants sont les moteurs asynchrones présentant en contrepartie des difficultés de réglage du régime car ils sont calés sur la fréquence du réseau électrique.

Ce type de moteur ne présente pas le couple suffisant au démarrage d'où la nécessité d'adjoindre un coupleur hydraulique pour démarrer en charge.

De plus, il faut cinq à huit fois plus de puissance au démarrage. Ce fort courant d'appel au démarrage doit être supporté par le réseau électrique.

Pour apporter une solution au problème de réglage du régime, on doit utiliser un convertisseur de fréquence qui permet au moteur de se comporter comme un moteur à courant continu aux fréquences voisines de zéro, c'est-à-dire au démarrage.

On retrouve tous les avantages pour l'entraînement mais viennent en contrepartie se greffer les problèmes de coût et de danger en cas de court-circuit.

Le convertisseur représente un module d'encombrement non négligeable qu'il faut loger en plus de l'ensemble réducteur.

Pour réduire l'encombrement, le moteur est placé en ligne avec le réducteur qui comporte un renvoi d'angle pour l'entraînement d'un rouleau d'extrémité.

L'ensemble moto-réducteur se développe ainsi le long du convoyeur évitant une disposition transversale au convoyeur peu souhaitable en raison de la largeur limitée par exemple d'une galerie de mine déjà occupée majoritairement par le convoyeur.

D'autres considérations sont à examiner également.

Les moteurs électriques de grande puissance sont des produits spécifiques fabriqués par un nombre extrêmement réduit de spécialistes. De plus, en raison de la faible demande, les séries ne dépassent pas quelques exemplaires.

Ainsi, les coûts de fabrication s'avèrent assez élevés. Il en est de même, bien entendu, pour les prix de vente.

Par ailleurs, ces moteurs de grande puissance sont lourds et encombrants. Ils nécessitent des moyens importants pour leur manipulation et leur montage.

A ces moteurs doivent être adjoints un ensemble réducteur et un module de commande en rapport avec la puissance consommée et transmise.

Cette accumulation de matériel, l'encombrement important, les coûts élevés d'achat et les difficultés de montage et d'installation ne donnent pas satisfaction.

Pour l'instant, il n'existe pas d'autre solution de substitution et les constructeurs d'installations nécessitant des moteurs de grande puissance avec réducteur doivent subir tous ces inconvénients.

Le présente invention a pour but de fournir un groupe moto-réducteur de puissance remédiant aux principaux inconvénients de la solution antérieure.

Selon l'invention, on réalise un groupe moto-réducteur de la même puissance qu'un moteur important en utilisant une pluralité de moteurs représentant chacun une fraction de la puissance totale. Les moteurs sont disposés en étoile ou en couronne autour d'une roue ou d'une couronne dentée sur laquelle le pignon de sortie de chacun des moteurs vient en prise.

L'ensemble est placé dans un carter compact et le volume intérieur libre existant au centre de la couronne formée par les blocs moteurs est occupé par le module de commande électronique de marche des moteurs.

De nombreux avantages découlent du nouveau groupe moto-réducteur selon l'invention tels que absence du réducteur, compacité, fiabilité et moindre coût à puissance équivalente.

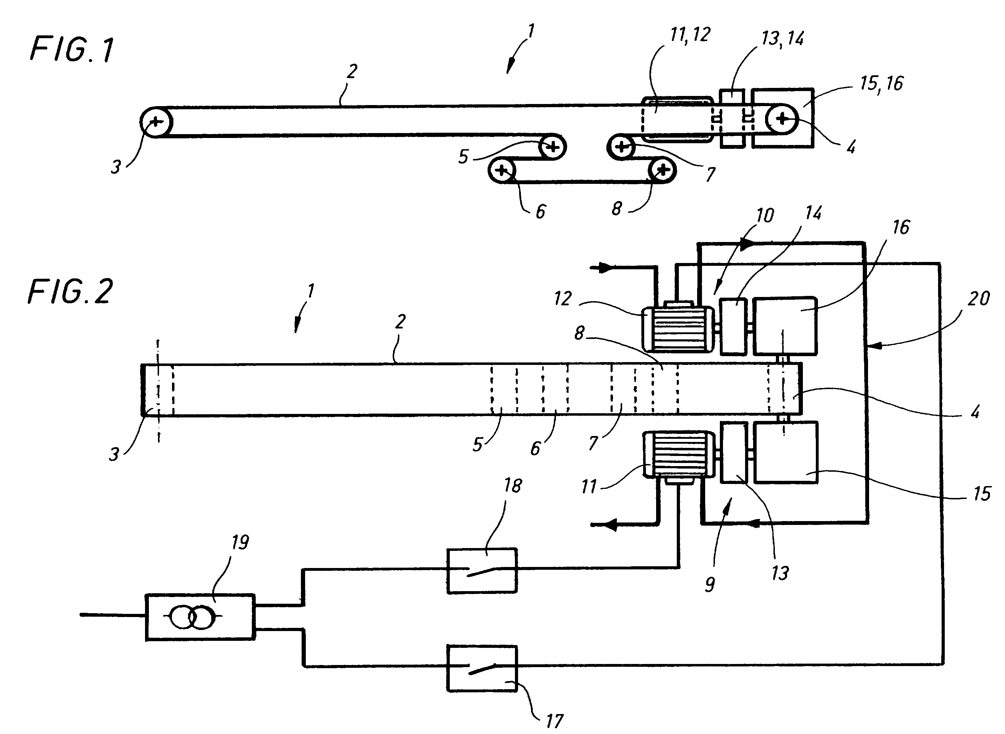

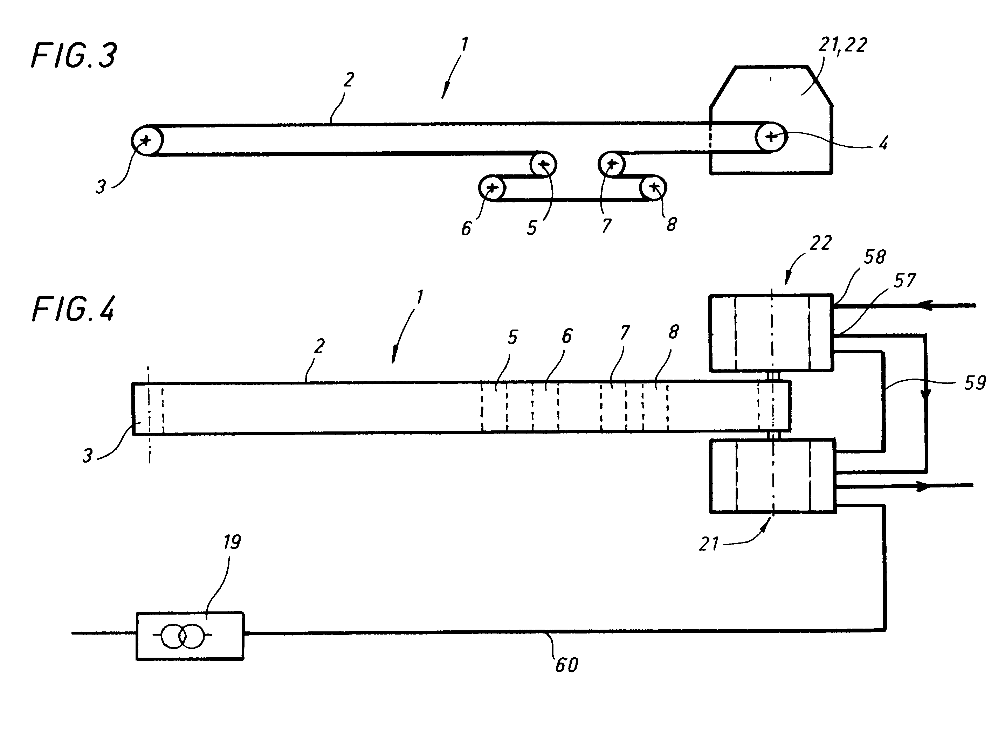

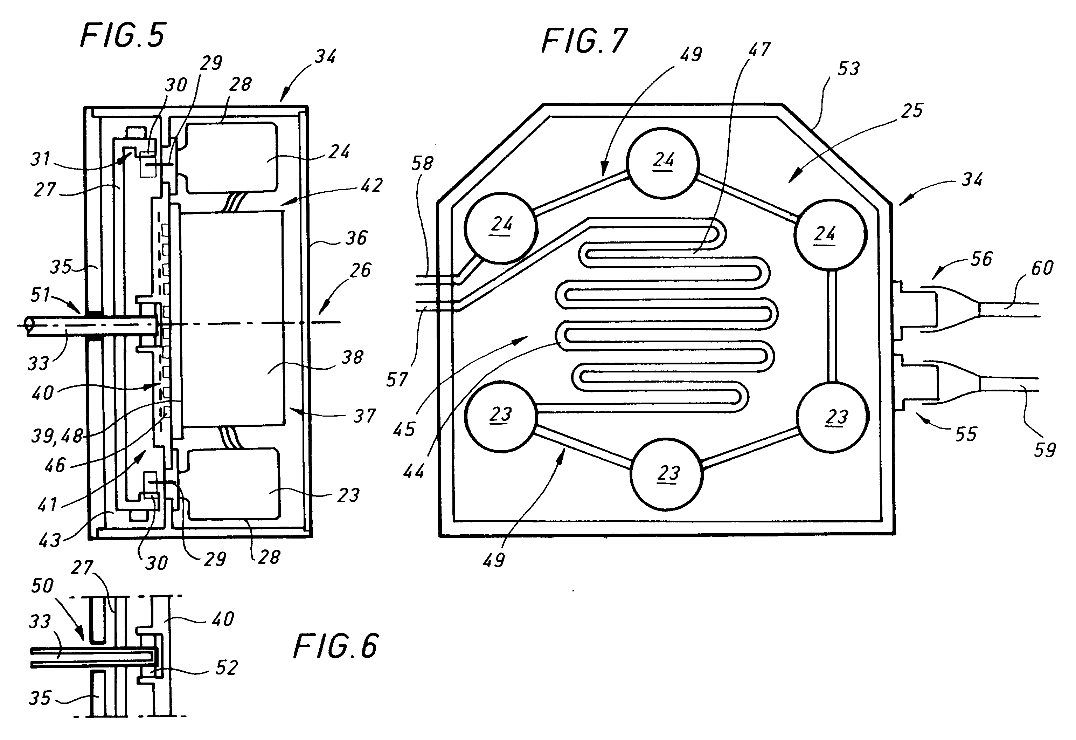

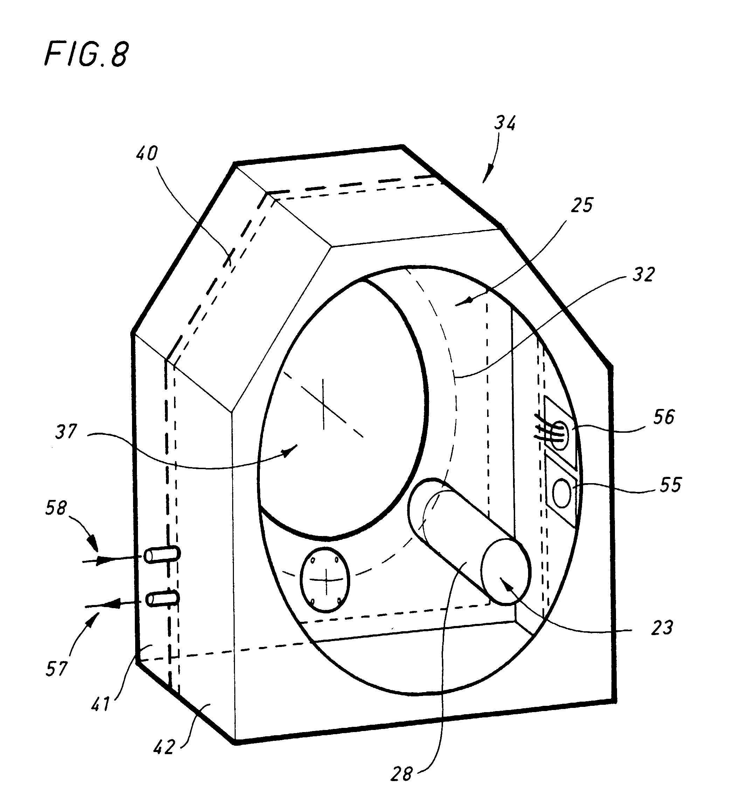

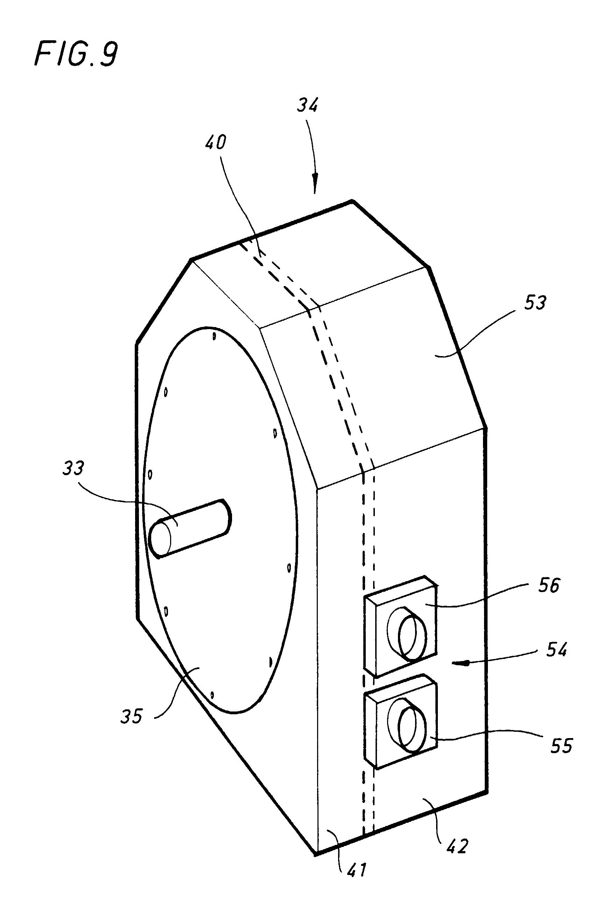

D'autres caractéristiques et avantages de l'invention apparaîtront dans la description qui suit, donnée à titre d'exemple et accompagnée des dessins dans lesquels :
. la figure 1 est une vue de profil d'un convoyeur entraîné par deux ensembles moteur-réducteurs classiques ;
. la figure 2 est une vue en plan d'un convoyeur entraîné par deux ensembles moteur-réducteurs classiques ;
. la figure 3 et 4 sont respectivement des vues de profil et en plan d'un convoyeur entraîné par deux groupes moto-réducteurs selon l'invention ;
. la figure 5 est une vue en coupe transversale montrant une variante du groupe moto-réducteur avec refroidissement selon l'invention ;
. la figure 6 est un agrandissement sur la coupe transversale de la figure 5 au niveau de l'arbre de sortie dans le cadre d'une variante à arbre creux ;
. la figure 7 est une vue en élévation de l'arrière du groupe moto-réducteur sans le module de commande, montrant un exemple de circuit de refroidissement ;
. les figures 8 et 9 sont respectivement des vues schématiques en perspective de l'arrière puis de l'avant du groupe moto-réducteur selon l'invention ;

A titre introductif, on examinera ci après en référence aux figures 1 et 2 une installation classique de convoyage présentant un transporteur 1 à bande 2 se développant entre un tambour libre 3 d'extrémité en tambour moteur 4 d'extrémité et un ensemble de tambours tendeurs 5, 6, 7, 8 disposés en deux groupes.

Le tambour moteur 4 est accouplé à deux groupes moto-réducteurs de grande puissance tels que 9 et 10 se développant le long de l'extrémité motrice du transporteur.

Chaque groupe est disposé en ligne le long de la bande et constitué d'un moteur 11,12, d'un coupleur hydraulique 13,14 et d'un réducteur 15,16 à plusieurs étages et renvoi d'angle à 90°.

Chaque moteur est commandé par un coffret de commande 17,18 à partir d'un transformateur unique 19.

Un circuit de refroidissement 20, par exemple à eau, assure le refroidissement des moteurs.

Cette installation présente tous les inconvénients déjà indiqués en partie introductive.

Il s'agit du coût des moteurs, des réducteurs et des coupleurs en raison de la puissance absorbée et transmise. Il s'agit aussi de l'encombrement et de la chaleur dissipée qu'il faut évacuer.

L'invention vise à supprimer ou tout au moins à améliorer notablement les inconvénients et les défauts de la solution antérieure.

En se référant aux figures 3 et 4, l'invention porte sur un nouveau groupe moto-réducteur électrique 21 ou 22 destiné à remplacer un ensemble formé du moteur électrique de forte puissance 11 ou 12 son circuit de commande 17 ou 18, le coupleur hydraulique 13 ou 14 et son réducteur 15 ou 16 associé à plusieurs étages et sortie à engrenage à renvoi d'angle.

Bien entendu, il s'applique aussi au remplacement d'un groupe moto-réducteur dit en ligne, c'est-à-dire dont la sortie du moteur est dans la même direction que la sortie avec réduction.

Pour ce faire, la puissance totale du moteur électrique unique 11 ou 12 est fractionnée en puissances élémentaires représentées par une pluralité de moteurs électriques tels que 23 et 24 de plus faible puissance en nombre quelconque supérieur à l'unité, par exemple quatre ou six ou huit disposés symétriquement en couronne ou en étoile 25, c'est-à-dire en périphérie d'un axe géométrique central 26 et s'engrenant sur une même roue ou couronne dentée 27.

Les moteurs 23 ou 24 sont de préférence répartis uniformément sur une circonférence et parallèles entre eux et à l'axe central 26.

Chaque moteur comporte un bloc moteur 28, un arbre de sortie 29 et un pignon d'attaque 30 terminant son arbre de sortie ou monté sur celui-ci.

Le pignon d'attaque 30 de l'arbre de sortie de chacun de ces moteurs 23,24 s'engrène sur la couronne ou roue dentée unique 27 à corps plan perpendiculaire à l'axe central 26. La périphérie dentée 31 intérieurement ou extérieurement de cette couronne ou roue dentée unique 27 coïncide avec le cercle enveloppe 32 formé par la base de la périphérie des pignons de sortie d'arbre de manière à obtenir un couplage réducteur au niveau de chaque moteur dans un même rapport global unique correspondant au rapport nécessaire de transmission.

A cet effet, les moteurs ont des caractéristiques électriques et mécaniques identiques donc des diamètres identiques de pignon de sortie.

La roue ou couronne dentée est montée ou rendue solidaire d'un arbre central 33 qui est l'arbre de sortie 33 du groupe moto-réducteur 21 ou 22. Son axe coïncide avec l'axe géométrique central 26.

L'ensemble est logé dans un carter de protection 34 étanche et de forme adaptée dont une des parois d'extrémité avant 35 ou arrière 36 est amovible, par exemple la paroi avant 35.

Les moteurs disposés en couronne délimitent un espace intérieur central 37 occupé par un module de commande 38 regroupant sur une plaque de base 39 les circuits électriques et électroniques de commande des moteurs réalisant ainsi un coefficient de compacité tout à fait exceptionnel.

Les engrenages transmettant la puissance des moteurs sont de type droit, conique ou hélicoïdal ou autre. La puissance fractionnée transmise au niveau de chaque pignon est située dans une gamme ne nécessitant pas de précautions mécaniques particulières.

Les pertes de transmission à ce niveau s'avèrent acceptables, malgré le nombre total important par exemple six ou huit de couplages par engrenages. La somme des pertes est inférieure à celle existant dans un réducteur multiétages tel qu'utilisé antérieurement.

En effet, le rapport de réduction est unique et direct, ce qui évite la multiplication des étages.

Par ailleurs, le rendement individuel des moteurs est bon et l'évacuation de la chaleur est répartie.

Le carter de protection 34 est divisé intérieurement en deux compartiments par une paroi de séparation 40 : à l'avant, un compartiment de réduction 41, à l'arrière, un compartiment de motorisation 42.

Pour garantir un bon fonctionnement mécanique, il y a lieu de lubrifier les organes mécaniques en rotation dans le compartiment de réduction. A cet effet, on apporte aux engrenages la quantité de lubrifiant nécessaire par exemple par barbotage représentant une certaine quantité d'huile 43 au fond du carter dans le compartiment de réduction 41.

L'étanchéité de ce compartiment à l'huile est garantie par les moyens nécessaires.

Pour des raisons d'accessibilité à la roue ou couronne dentée, en vue de l'entretien des organes mécaniques ou de leur éventuel remplacement, on réalise amovible la paroi de fermeture 35 d'extrémité avant du carter en prévoyant les moyens d'étanchéité nécessaires.

La paroi de séparation 40 est une plaque métallique solidarisée à la surface latérale intérieure du carter ou moulée avec elle. L'ensemble peut être réalisé en mécano-soudure ou par fonderie.

Cette paroi 40 remplit une double fonction: elle assure d'abord la séparation physique avec étanchéité entre les deux compartiments de l'espace intérieur du carter, elle procure ensuite un support de fixation pour les moteurs électriques.

Concernant l'étanchéité, celle du compartiment de réduction 41 est du type étanchéité au lubrifiant et celle du compartiment de motorisation 42 soit simple soit du type antidéflagrant.

On peut en effet fixer de façon satisfaisante les blocs 28 des moteurs électriques 23,24 en appliquant contre et en fixant leur face frontale sur la plaque de séparation 40 par l'intermédiaire par exemple de plusieurs vis.

Sur cette plaque de séparation 40 est également rapportée la face avant ouverte ou fermée du boîtier renfermant le module de commande 38 des moteurs et donc sa plaque de base 39.

Cette plaque 40 remplit une troisième fonction : celle du refroidissement. En effet, comme représenté sur les figures, elle peut être utilisée sous la forme d'un radiateur 44 traversé par un circuit de refroidissement 45 dans lequel circule un fluide de refroidissement ou simplement caloporteur, chargé d'emporter les calories provenant de la dissipation calorifique dans les circuits et dans les moteurs.

Selon une variante, la plaque comporte des rainures 46 par exemple en serpentin 47 formant des canaux recouverts par une plaque de fermeture 48 dans lesquels circule le liquide caloporteur par exemple de l'eau.

Il peut s'agir également d'un circuit de refroidissement en tubes de cuivre ou en tube souple.

La face avant du module peut constituer le radiateur ou être rapportée sur celui-ci. Dans le premier cas, la plaque de fermeture est la plaque de face avant du module.

Comme représenté sur les dessins, le circuit de refroidissement 45 peut se poursuivre à travers les blocs des moteurs par un circuit annexe 49 par lesquels les calories seront emportées dès leur production.

Le circuit annexe 49 affecte un tracé polygonal suivant celui de la couronne 25 des arbres de sortie des moteurs 23 ou 24.

L'arbre central 33 et arbre de sortie de la roue ou la couronne dentée unique 27 est porté par un palier avant 50 avec joint logé dans une ouverture traversante 51 de la plaque frontale 35 du carter 34 et un palier arrière d'extrémité 52 monté dans un logement-saillie de la paroi de séparation 40.

L'arbre de sortie 33 peut être creux comme représenté sur la figure 6.

Le carter 34 comporte sur sa paroi latérale extérieure 53 deux groupes d'arrivée et de départ. Il s'agit d'abord des raccordements électriques 54 sous la forme de prises 55 et 56, de passe-câble ou autre interface étanche ou du type antidéflagrant. Il s'agit ensuite des raccordements hydrauliques 57 et 58 sous la forme de raccords étanches et/ou antidéflagrants.

Les raccordements électriques s'effectuent de préférence en ligne passante entre deux groupes moto-réducteurs c'est-à-dire premier module de commande traversant et raccordé au deuxième module par un tronçon 59 poursuivant la ligne d'alimentation 60 comme représenté sur la figure 4.

Le groupe moto-réducteur selon l'invention regroupe tous les organes dans un espace restreint et protégé. Il constitue un modèle d'intégration conférant à cette unité un encombrement réduit optimal considérant la puissance mise en oeuvre.

L'invention trouve son application non seulement dans le domaine d'acheminement du charbon ou du minerai au fond de la mine, mais aussi à chaque fois qu'un moteur électrique de grande puissance est nécessaire dans le cadre d'une installation industrielle. Il s'agit notamment de l'industrie lourde, sidérurgique ou autre, de la grosse industrie mettant en oeuvre des quantités importantes de matières. On peut prévoir également selon le même principe de construire des moteurs électriques de puissance inférieure dès que les avantages constructifs de l'invention dépassent ceux de la solution à moteur unique.

## Revendications

1. Groupe moto-réducteur électrique en particulier de grande puissance présentant plusieurs moteurs électriques et une sortie avec réduction en ligne avec la sortie des moteurs caractérisé en ce qu'il se compose d'une pluralité de moteurs électriques inférieurs (23) et supérieurs (24) disposés en couronne ou en étoile (25) autour d'une roue ou couronne dentée unique (27) à arbre de sortie (33) unique, couronne sur laquelle s'engrène le pignon d'attaque (30) de chaque moteur (23,24), l'arbre de sortie de la couronne constituant un axe central de symétrie, l'ensemble étant enfermé dans un carter étanche (34) et en ce que le volume central intérieur libre délimité par la couronne ou étoile (25) des moteurs est occupé par un module de commande (38) renfermant les circuits électriques et électroniques de commande de synchronisme et de la marche des moteurs électriques.

2. Groupe moto-réducteur selon la revendication 1 caractérisé en ce que l'espace intérieur du carter (34) est délimité par une paroi de séparation (40) formant d'abord un compartiment de réduction (41) rempli de lubrifiant et contenant d'une part la roue ou la couronne dentée unique (27) et d'autre part les pignons d'attaque (30) des moteurs et ensuite un compartiment de motorisation (42) contenant les moteurs et leur module de commande (38).

3. Groupe moto-réducteur selon la revendication 1, caractérisé en ce que les circuits du module de commande (38) sont montés sur une plaque de base (39).

4. Groupe moto-réducteur selon les revendications 1 et 2 caractérisé en ce que les moteurs sont fixés sur la plaque de séparation (40).

5. Groupe moto-réducteur selon la revendication 2 caractérisé en ce que la plaque de séparation (40) comporte un circuit de refroidissement (45) obturé par une plaque de fermeture (48) en contact avec la plaque de séparation (40).

6. Groupe moto-réducteur selon les revendications 2 et 5 caractérisé en ce que la plaque (39) de base du module de commande (38) est montée sur la plaque de fermeture (48) du circuit de refroidissement (45) de la plaque de séparation (40).

7. Groupe moto-réducteur selon la revendication 5 caractérisé en ce que le circuit de refroidissement (45) de la plaque de séparation (40) est formé de rainures (46) conformées dans la plaque de séparation (40) et en ce que ces rainures sont obturées par la plaque de fermeture (48).

8. Groupe moto-réducteur selon la revendication 5 caractérisé en ce que le circuit de refroidissement (45) de la plaque de séparation est formé d'un serpentin d'un tube.

9. Groupe moto-réducteur selon la revendication 5 caractérisé en ce que le circuit de refroidissement (45) de la plaque se poursuit par un circuit annexe (49) à travers les moteurs électriques (23,24).

10. Groupe moto-réducteur selon les revendications 1 et 2 caractérisé en ce que les moteurs (23,24) sont alimentés par des arrivées de câble ou des prises électriques (55,56) sur un des côtés du carter (34) et en ce que le départ (57) ou l'arrivée (58) du fluide caloporteur ou de refroidissement s'effectue également sur un côté du carter.

11. Groupe moto-réducteur selon la revendication 10 caractérisé en ce que les arrivées et départs électriques et hydrauliques sont du type antidéflagrant et en ce que le module de commande (38) est enfermé dans un boîtier antidéflagrant dont la face avant est la plaque de base (39).
